Europäisches Patentamt

European Patent Office

Office européen des brevets

(19)

(11) Veröffentlichungsnummer: **0 486 867 A1**

# EUROPÄISCHE PATENTANMELDUNG

(12)

(21) Anmeldenummer: **91118806.8**

(22) Anmeldetag: **05.11.91**

(51) Int. Cl.5: **H01R 35/02**

(30) Priorität: **17.11.90 DE 4036680**

(43) Veröffentlichungstag der Anmeldung:
**27.05.92 Patentblatt 92/22**

(84) Benannte Vertragsstaaten:
**DE FR GB IT SE**

(71) Anmelder: **kabelmetal electro GmbH**
**Kabelkamp 20 Postfach 260**
**W-3000 Hannover 1(DE)**

(72) Erfinder: **Schauer, Friedrich, Dipl.-Ing.**
**Forstweg 10**
**W-8501 Heroldsberg(DE)**

(54) Vorrichtung zur Stromübertragung zwischen zwei Endstellen.

(57) Es wird eine Vorrichtung zur Stromübertragung zwischen zwei Endstellen angegeben, zwischen denen eine in einem Gehäuse untergebrachte, der elektrischen Verbindung dienende und in Windungen verlaufende Flachband-Leitung (10) mit mindestens zwei elektrischen Leitern angeordnet ist. Die Länge der Leiter ist wesentlich größer als der Abstand der beiden Endstellen voneinander. Mindestens eine der beiden Endstellen ist relativ zu der anderen beweg-bar. Zum einfachen Anschließen einer weiterführen-den Leitung sind an die Leiter der Flachband-Leitung (10) an ihren beiden Enden gegeneinander isolierte metallische Leiter (14) elektrisch leitend angeschlos-sen, die in ihrem Verlauf derart angeordnet sind, daß ihre freien, als Steckkontakte ausgebildeten Enden in der fertig montierten Vorrichtung von außerhalb des Gehäuses durch eine Durchgangsöffnung (16) in der Wandung (1) desselben zugänglich sind.

Fig. 3

EP 0 486 867 A1

Die Erfindung betrifft eine Vorrichtung zur Stromübertragung zwischen zwei Endstellen, zwischen denen eine in einem Gehäuse untergebrachte, der elektrischen Verbindung dienende und in Windungen verlaufende Flachband-Leitung mit mindestens zwei elektrischen Leitern angeordnet ist, deren Länge wesentlich größer als der Abstand der beiden Endstellen voneinander ist, bei welcher mindestens eine der beiden Endstellen relativ zu der anderen bewegbar ist und bei welcher an die Leiter der Flachband-Leitung jeweils Leiter einer weiterführenden Leitung elektrisch leitend anschließbar sind (DE-OS 36 41 706).

Geräte mit derartigen Vorrichtungen werden beispielsweise für die Stromzuführung für einen Prallschutz in einem Kraftfahrzeug verwendet, bei dem eine elektrische Leitung im Lenkrad desselben untergebracht ist. Ein wesentliches Problem bei diesen Geräten ist die Stromübertragung zwischen feststehenden und beweglichen Teilen. Dieses Problem tritt bei allen Geräten auf, bei denen zwei relativ zueinander bewegbare Endstellen vorhanden sind, von denen in den meisten Fällen eine als Festpunkt ausgebildet ist. Die für solche Fälle seit langem bekannten Schleifkontakte bzw. Schleifringe sind einem Verschleiß unterworfen und insbesondere bei niedrigen Stromstärken wegen der schwankenden Übergangswiderstände nachteilig.

Bei der eingangs erwähnten, bekannten Vorrichtung nach der DE-OS 36 41 706 erfolgt die Stromübertragung durch die nach Art eines Federhauses gewickelte Flachband-Leitung. Bei einer relativen Drehbewegung der beiden durch die Flachband-Leitung - im folgenden kurz als "FBL" bezeichnet - verbundenen Endstellen "atmet" die aufgewickelte FBL wie die Feder einer Uhr. Die Windungen werden in der einen Drehrichtung auf einen kleinen Durchmesser zusammengezogen. Sie gehen in der anderen Drehrichtung wieder auf einen größeren Durchmesser auf. An die abisolierten Leiter der FBL sind die Leiter einer weiterführenden Leitung angeschlossen. Damit ist eine komplette, aus gewickelter FBL und angeschlossenen, weiterführenden Leitungen bestehende Vorrichtung geschaffen. Diese Vorrichtung ist nur für einen speziellen Anwendungsfall einsetzbar, auf den Länge und Form der weiterführenden Leitungen abgestimmt sind. Der Anschluß anderer Leitungen an die FBL erfordert andere Werkzeuge.

Der Erfindung liegt die Aufgabe zugrunde, die eingangs beschriebene Vorrichtung so weiterzubilden, daß an die Leiter der FBL auf einfache Weise beliebig gestaltete weiterführende Leitungen angeschlossen werden können.

Diese Aufgabe wird gemäß der Erfindung dadurch gelöst, daß an die Leiter der Flachband-Leitung an ihren beiden Enden gegeneinander isolierte metallische Leiter elektrisch leitend angeschlossen sind, die in ihrem Verlauf derart angeordnet sind, daß ihre freien, als Steckkontakte ausgebildeten Enden in der fertig montierten Vorrichtung von außerhalb des Gehäuses durch eine Durchgangsöffnung in der Wandung desselben zugänglich sind.

Diese Vorrichtung ist unabhängig von der Art der weiterführenden Leitung bzw. Leitungen einsetzbar. An das Ende der jeweils weiterführenden Leitung müssen nur mit deren Leitern verbundene Kontakte angeschlossen werden, die direkt oder indirekt an die als Steckkontakte ausgeführten Enden der metallischen Leiter anschließbar sind. Die gesamte Vorrichtung läßt sich als geschlossenes Gerät, beispielsweise in Form einer Kassette, herstellen, das an zwei Stellen Durchgangsöffnungen zum Anschließen der weiterführenden Leitungen hat. Dabei können mit entsprechenden Adaptern bzw. Zwischensteckern Leitungen mit jedem beliebigen Aufbau angeschlossen werden. Die Fertigstellung bzw. Konfektionierung der Flachband-Leitung - im folgenden kurz "FBL" genannt - ist sehr einfach, da lediglich die metallischen Leiter an die Leiter der FBL angeschlossen werden müssen.

Vorteilhafte Ausgestaltungen der Erfindung gehen aus den Unteransprüchen hervor.

Ein Ausführungsbeispiel des Erfindungsgegenstandes ist in den Zeichnungen dargestellt.

Es zeigen:

Fig. 1 und 2 schematisch Querschnitte durch zwei unterschiedliche Geräte mit einer Vorrichtung nach der Erfindung bestückte Geräte.

Fig. 3 ein Ende der in der Vorrichtung eingesetzten FBL in vergrößerter Darstellung.

Fig. 4 eine gegenüber Fig. 3 ergänzte Ausführungsform.

Fig. 5 und 6 Einzelteile der Vorrichtung.

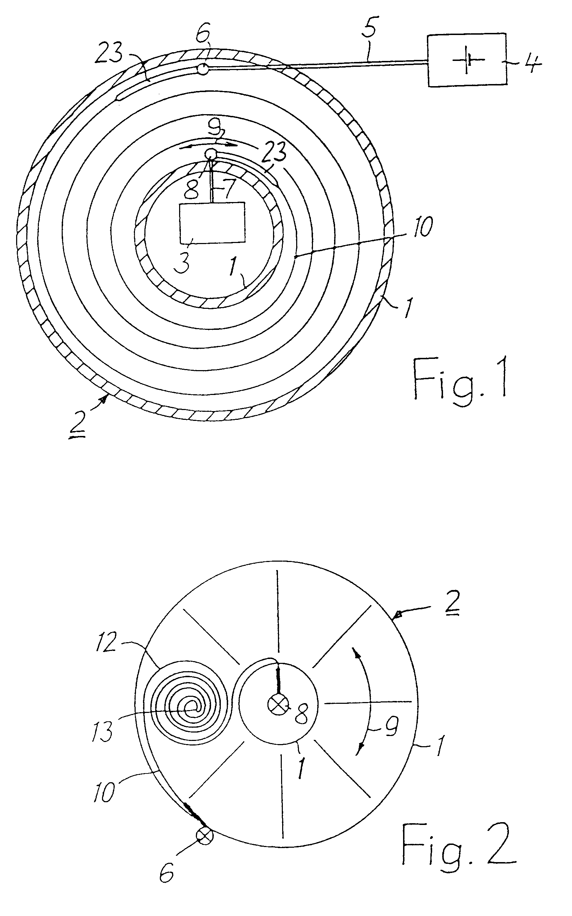

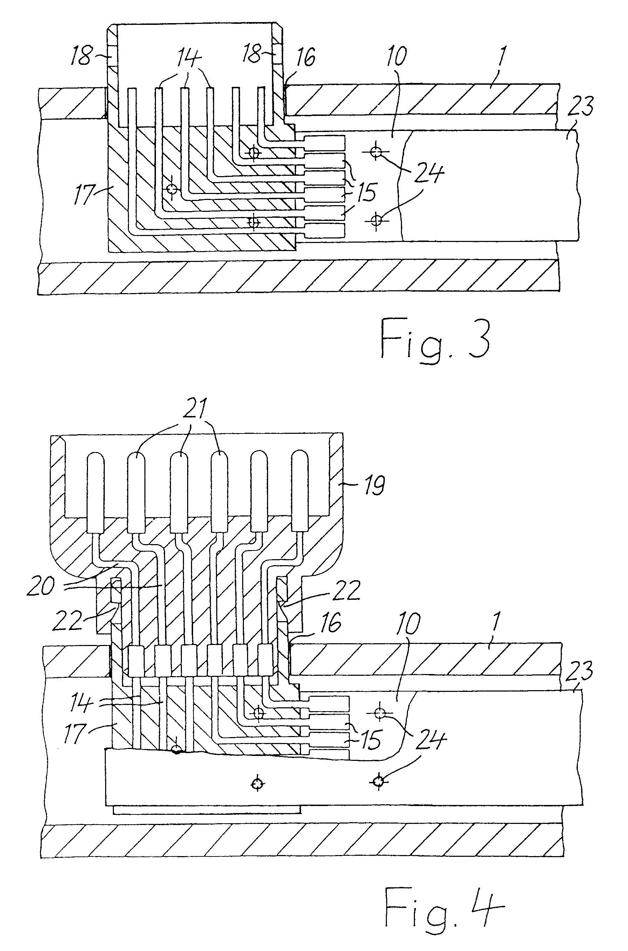

In Fig. 1 sind schematisch zwei beispielsweise kreisförmig ausgebildete Wandungen 1 des Gehäuses 2 eines elektrischen Geräts dargestellt. Dieses Gerät kann beispielsweise ein in das Lenkrad eines Kraftfahrzeugs eingebautes Steuergerät sein. Zur Stromversorgung einer Elektronik 3 des Geräts ist dasselbe an die Batterie 4 des Kraftfahrzeugs angeschlossen. Die Batterie 4 ist über eine elektrische Leitung 5 mit einer als Festpunkt ausgeführten Endstelle 6 verbunden. Die Elektronik 3 ist über eine elektrische Leitung 7 an eine Endstelle 8 angeschlossen, die in Richtung des Doppelpfeiles 9 bewegbar ist. Zwischen den beiden Endstellen 6 und 8 ist eine FBL 10 angebracht. Sie ist in dem in den Fig. 3 und 6 dargestellten Ausführungsbeispiel mit sechs Leitern 11 versehen, die auch unterschiedliche Querschnitte haben können. Es sollen mindestens zwei Leiter 11 in der FBL 10 angeordnet sein. Die Leitungen 5 und 7 sind "weiterführende Leitungen", die an die FBL 10 anzuschließen sind.

Die FBL 10 kann gemäß Fig. 1 zwischen den beiden Endstellen 6 und 8 in mehreren Windungen, also nach Art eines Federhauses von Uhren, angeordnet sein. Obwohl die Anzahl der Umdrehungen eines Lenkrades auf etwa sechs Umdrehungen begrenzt ist, sollen wesentlich mehr als sechs Windungen für die FBL 10 vorgesehen sein. Die Drehbewegung der Endstelle 8 macht sich dann für eine einzelne Windung der FBL 10 nicht wesentlich bemerkbar. Es wird lediglich der Durchmesser des aus allen Windungen der FBL 10 bestehenden Wickels verkleinert bzw. vergrößert. Die FBL 10 ist vorzugsweise mit flachen Leitern 11 ausgerüstet. Diese Ausführungsform der FBL 10 ist besonders dünn und nimmt daher sehr wenig Raum ein. Grundsätzlich könnte die FBL 10 aber auch runde Leiter haben.

Die FBL 10 kann zwischen den beiden Endstellen 6 und 8 gemäß Fig. 2 auch als Bifilarspule 12 gewickelt sein. In der Bifilarspule 12 ist die FBL 10 etwa in ihrer Mitte umgebogen, so daß sich eine Umkehrstelle 13 ergibt. Von dort aus ist die FBL 10 zweilagig gewickelt. Wenn an ihren beiden Enden in entgegengesetzter Richtung gezogen wird, verkleinert die durch das Wickeln entstandene Bifilarspule 12 ihren Durchmesser. Infolge der Elastizität der FBL 10 wickelt sie sich wieder auf, wenn die an ihren Enden angreifenden Zugkräfte fortfallen. Der Durchmesser der Bifilarspule 6 in der Ausgangsstellung der Vorrichtung wird zweckmäßig so gewählt, daß er gleich dem kürzesten Abstand der beiden Endstellen 6 und 8 voneinander oder kleiner als dieser Abstand ist.

Zur Konfektionierung der beiden Enden der FBL 10 werden an deren Leiter 11 (Fig. 6) metallische Leiter 14 elektrisch leitend angeschlossen. Die FBL 10 hat im dargestellten Ausführungsbeispiel sechs Leiter 11. Es sind dementsprechend sechs gegeneinander isolierte, metallische Leiter 14 vorgesehen, die an den Verbindungsstellen 15 mit den Leitern 11 der FBL 10 beispielsweise durch Löten, Schweißen oder durch Anschlagen verbunden sind.

Die freien Enden der Leiter 14 sind als Steckkontakte ausgebildet, auf die entsprechende Gegenkontakte aufgesteckt werden können. Sie sind im dargestellten Ausführungsbeispiel um 90° gebogen, so daß sie in Arbeitsposition in einer Durchgangsöffnung 16 in der Wandung 1 des Gehäuses 2 liegen. Die Leiter 14 können auch geradlinig ausgeführt sein und in Richtung der Leiter 11 der FBL 10 weiterführen, wenn die Durchgangsöffnung 16 sich beispielsweise in der Umfangsfläche des Gehäuses 2 befindet. Sie sind in der Durchgangsöffnung 16 jeweils so angeordnet, daß von außen Gegenkontakte aufgesteckt werden können. Die Leiter 14 sind vorzugsweise in einem aus Isoliermaterial bestehenden Kontaktträger 17 festgelegt.

Der Kontaktträger 17 kann vorgefertigt sein. Er kann jedoch auch um die metallischen Leiter 14 herumgespritzt werden. Der Kontaktträger 17 ragt durch die Durchgangsöffnung 16 hindurch und hat an seinem freien Ende Elemente zum federnden Einrasten von aufzusteckenden Bauteilen. Bei diesen Elementen handelt es sich beispielsweise um Löcher 18, in die federnde Elemente eines Stekkers oder Zwischensteckers bzw. Adapters einrasten können.

Ein solcher Zwischenstecker 19 geht aus Fig. 4 hervor. Er kann an seinem freien Ende beliebig gestaltet und auf spezielle Kundenwünsche abgestimmt sein. Auf der Seite, auf welcher der Zwischenstecker 19 auf die Leiter 14 aufzustecken ist, muß er allerdings passend ausgeführt sein. In dem Zwischenstecker 19 sind Leiter 20 gegeneinander isoliert angebracht, die an einem Ende der auf die Leiter 14 aufgesteckt werden können. Am anderen Ende der Leiter 20 sind beispielsweise Steckerstifte 21 vorgesehen, deren Größe und Abstand voneinander variabel sind.

Die Steckerstifte 21 können je nach Ausführungsform einer anzuschließenden weiterführenden Leitung 5 bzw. 7 unterschiedlich ausgebildet sein. Der Zwischenstecker 19 ist auf den Kontaktträger 17 aufsteckbar, wobei in seiner Endposition Nasen 22 in die Löcher 18 des Kontaktträgers 17 eingreifen.

Über den Verbindungsstellen 15 der Leiter 14 mit den Leitern 11 der FBL 10 kann ein Knickschutzbügel 23 angebracht sein, der um den Kontaktträger 17 herumgreift und sich bis über die FBL 10 erstreckt. Bewegungen der FBL 10 können sich daher nicht auf die Verbindungsstellen 15 auswirken. Um zusätzlich eine Zugentlastung der Verbindungsstellen 15 zu erreichen, können in der FBL 10 und auch in dem Kontaktträger 17 Löcher 24 vorgesehen werden, in die entsprechende Zapfen des Knickschutzbügels 23 eingreifen. Der Knickschutzbügel 23 kann außerdem punktweise durch Ultraschallschweißen mit der FBL 10 bzw. dem Kontaktträger 17 verbunden werden.

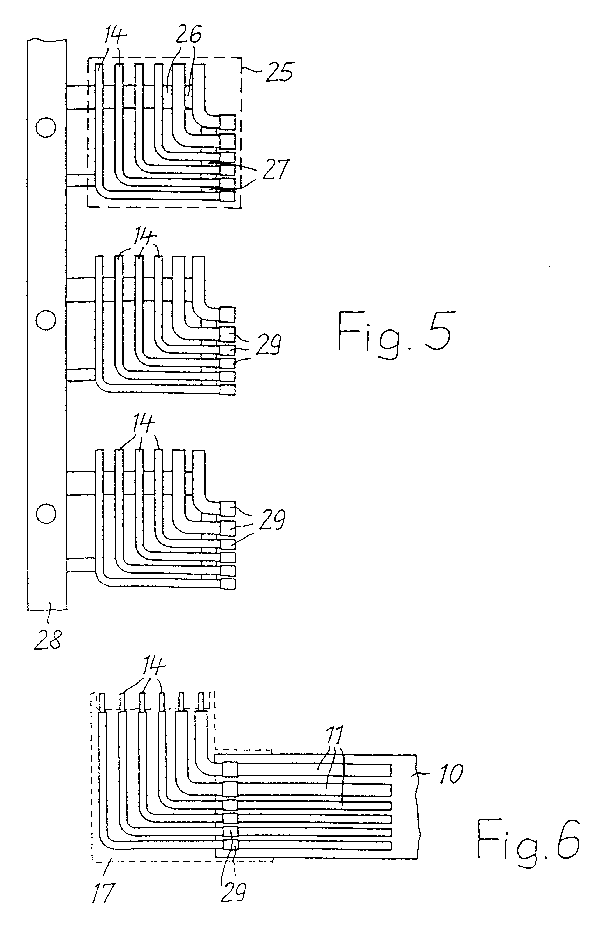

Zur Herstellung einer konfektionierten FBL 10 können beispielsweise vorgefertigte Bauteile 25 mit Leitern 14 verwendet werden, wie sie aus Fig. 5 gestrichelt umrandet hervorgehen. In einem Bauteil 25 sind die einzelnen Leiter 14 über Stege 26 und 27 miteinander verbunden. Sie können an einem durchgehenden Streifen 28 befestigt sein, wodurch eine automatische Verarbeitung erleichtert wird. An den zum Anschluß an die Leiter 11 der FBL 10 vorgesehenen Enden können Anschlagteile 29 oder flache Zonen zum Schweißen oder Löten angebracht sein. Die Leiter 14 der Bauteile 25 sind in den Fig. 5 und 6 in Anlehnung an die Ausführungsform der Fig. 3 und 4 wieder gebogen dargestellt. Sie können jedoch auch geradlinig verlaufen.

Um ein Bauteil 25 wird zunächst der Kontaktträger 17 herumgeformt. Das kann vorzugsweise durch Spritzgießen erfolgen. Es kann aber auch ein vorgefertigter Kontaktträger 17 verwendet werden. Sobald die Leiter 14 im Kontaktträger 17 fixiert sind, werden die Stege 26 und 27 herausgestanzt, so daß die Leiter 14 gegeneinander isoliert sind. Der so mit Leitern 14 bestückte Kontaktträger 17 kann dann in einem Arbeitsgang am Ende der FBL 10 festgelegt werden. Grundsätzlich wäre es auch möglich, das Bauteil 25 erst am Ende der FBL 10 festzulegen und erst dann den Kontaktträger 17 anzubringen. Das fertiggestellte Ende einer entsprechend konfektionierten FBL 10 geht aus Fig. 6 hervor. Die Leiter 11 der FBL 10 sind dabei mit eingezeichnet. Sie können unterschiedliche Querschnitte haben, an die die Querschnitte der Leiter 14 anzupassen sind. Der Kontaktträger 17 ist nur gestrichelt angedeutet. Die fertige konfektionierte FBL 10 kann in das Gehäuse 2 des entsprechenden Geräts eingelegt werden.

**Patentansprüche**

1. Vorrichtung zur Stromübertragung zwischen zwei Endstellen, zwischen denen eine in einem Gehäuse untergebrachte, der elektrischen Verbindung dienende und in Windungen verlaufende Flachband-Leitung mit mindestens zwei elektrischen Leitern angeordnet ist, deren Länge wesentlich größer als der Abstand der beiden Endstellen voneinander ist, bei welcher mindestens eine der beiden Endstellen relativ zu der anderen bewegbar ist und bei welcher an die Leiter der Flachband-Leitung jeweils Leiter einer weiterführenden Leitung elektrisch leitend anschließbar sind, dadurch gekennzeichnet, daß an die Leiter (11) der Flachband-Leitung (10) an ihren beiden Enden gegeneinander isolierte metallische Leiter (14) elektrisch leitend angeschlossen sind, die in ihrem Verlauf derart angeordnet sind, daß ihre freien, als Steckkontakte ausgebildeten Enden in der fertig montierten Vorrichtung von außerhalb des Gehäuses (2) durch eine Durchgangsöffnung (16) in der Wandung (1) desselben zugänglich sind.

2. Vorrichtung nach Anspruch 1, dadurch gekennzeichnet, daß die metallischen Leiter (14) gemeinsam in einem innerhalb des Gehäuses (2) angeordneten Kontaktträger (17) angeordnet sind.

3. Vorrichtung nach Anspruch 1 oder 2, dadurch gekennzeichnet, daß der Kontaktträger (17) durch die Durchgangsöffnung (16) des Gehäuses (2) hindurchragt und an seinem aus dem Gehäuse (2) herausragenden Ende Elemente (18) zum einrastenden Aufstecken eines Steckelements (19) aufweist.

4. Vorrichtung nach einem der Ansprüche 1 bis 3, dadurch gekennzeichnet, daß an dem Kontaktträger (17) ein sich über das Ende der Flachband-Leitung (10) erstreckender Knickschutzbügel (23) festgelegt ist.

5. Vorrichtung nach einem der Ansprüche 1 bis 4, dadurch gekennzeichnet, daß die metallischen Leiter (14) um 90° abgebogen sind.

6. Vorrichtung nach einem der Ansprüche 1 bis 5, dadurch gekennzeichnet, daß die metallischen Leiter (14) an die Leiter (11) der Flachband-Leitung (10) angeschlagen sind.

7. Vorrichtung nach einem der Ansprüche 1 bis 5, dadurch gekennzeichnet, daß die metallischen Leiter (14) mit den Leitern (11) der Flachband-Leitung (10) verschweißt sind.

8. Vorrichtung nach einem der Ansprüche 1 bis 5, dadurch gekennzeichnet, daß die metallischen Leiter (14) mit den Leitern (11) der Flachband-Leitung (10) verlötet sind.

9. Verfahren zur Herstellung einer Vorrichtung nach einem der Ansprüche 1 bis 8, dadurch gekennzeichnet,
   - daß die zu einer Einheit (25) zusammengefaßten metallischen Leiter (14) in einen Kontaktträger (17) eingebettet werden,
   - daß die Leiter (14) dann nach Fixierung im Kontaktträger (17) voneinander getrennt werden,
   - daß die Leiter (14) danach in einem Arbeitsgang mit den Leitern (11) der Flachband-Leitung (10) verbunden werden und
   - daß die fertiggestellte Flachband-Leitung (10) abschließend derart in das Gehäuse (2) eingesetzt wird, daß der Kontaktträger (17) in einer Durchgangsöffnung (16) in der Wandung (1) des Gehäuses (2) liegt.

Fig.1

Fig.2

Fig. 3

Fig. 4

Fig.5

Fig.6

Europäisches
Patentamt

**EUROPÄISCHER RECHERCHENBERICHT**

Nummer der Anmeldung

EP    91 11 8806

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-U-8 914 423 (KABELMETAL ELECTRO) | 1-3,6,8 | H01R35/02 |
| A | | 9 | |
| | * Seite 2, Spalte 3 - Seite 3, Spalte 1 * | | |
| | * Seite 5, Spalte 3 - Seite 6, Spalte 2; Abbildungen 1-6 * | | |
| | --- | | |
| D,A | DE-A-3 641 706 (KABELMETAL ELECTRO) | 1,4 | |
| | * Spalte 3, Zeile 50 - Spalte 4, Zeile 50; Abbildungen 1-6 * | | |
| | --- | | |
| A | DE-A-3 541 287 (KABELMETAL ELECTRO) | 1,4 | |
| | * Spalte 2, Zeile 53 - Spalte 3, Zeile 16; Abbildungen 1-3 * | | |
| | ----- | | |
| | | | **RECHERCHIERTE SACHGEBIETE (Int. Cl.5)** |
| | | | H01R |
| | | | H02G |

Der vorliegende Recherchenbericht wurde für alle Patentansprüche erstellt

| Recherchenort | Abschlußdatum der Recherche | Prüfer |
|---|---|---|
| BERLIN | 16 MAERZ 1992 | ALEXATOS G. |